Europäisches Patentamt

European Patent Office

Office européen des brevets

(11) Publication number: **0 265 919**
**A1**

## (12) EUROPEAN PATENT APPLICATION

(21) Application number: 87115809.3

(22) Date of filing: 28.10.87

(51) Int. Cl.4: **F01L 3/02** , B23P 15/00

(30) Priority: 28.10.86 JP 256203/86

(43) Date of publication of application:
**04.05.88 Bulletin 88/18**

(84) Designated Contracting States:
**DE FR GB**

(71) Applicant: **Fuji Valve Co., Ltd,
Tameike Meisan Bldg, 8th Floor No. 1-12,
Akasaka 1-chome, Minato-ku
Tokyo(JP)**

(72) Inventor: **Sasaki, Naomi
1-39-11, Shonandai
Fujisawa-shi Kanagawa-ken(JP)**
Inventor: **Oikawa, Yukizo
341-26, Osogo
Fujisawa-shi Kanagawa-ken(JP)**
Inventor: **Hitomi, Keisuke
1460-11, Fukaya
Ayase-shi Kanagawa-ken(JP)**

(74) Representative: **Schmidt, Horst, Dr.
Siegfriedstrasse 8
D-8000 München 40(DE)**

(54) **Light-weight engine valve and method of producing the same.**

(57) The present invention provides an improved light-weight engine valve including a core material contained in the interior thereof or a hollow portion formed therein and capable of being produced in accordance with an improved method which is performed through the reduced number of simplified steps.

FIG. 1

## LIGHT-WEIGHT ENGINE VALVE AND METHOD OF PRODUCING THE SAME

### BACKGROUND OF THE INVENTION

#### Field of the Invention:

The present invention relates to a light-weight engine valve for use in internal combustion engines and a method of producing such a light-weight engine valve.

#### Description of the Prior Art:

As internal combustion engines are being required to operate at higher speeds and outputs, engine valves have to resist high temperature atmosphere and to be of light-weight to avoid a harmful influence thereon due to inertia.

One attempt that has been made to decrease valve weight is that of reducing the diameter of the stem portion of a valve. Such valves have been put into practical use but are limited as to the amount of reduction that can be realized because of the need to maintain the strength of the valve stem. Other attempt has been made to provide a hollow valve. For example, Japanese Utility Model Publication 60-34725 discloses an engine valve fabricated by preparing a steel blank or a preform having a head and stem formed thereon, drilling the blank or preform to form a hollow portion therein and filling the hollow valve portion with a core of aluminum or magnesium based alloy. Further, Japanese Patent Publication 51-29106 or 51-29506 discloses an engine valve produced by preparing a pipe-like blank, inserting an insert as a disposable core into the bore of the pipe or inserting and bonding an insert as a core in the interior of the pipe-like blank and upsetting and hot press working the assembly. A further attempt has been made to produce hollow valve head, stem and end portion, separately, and to one another to form a hollow engine valve. A further attempt has been made to provide an engine valve formed of light metal.

However, these attempts are disadvantageous in that they require complicated and difficult working operations and then are costly due to the fact that the valve blank or preform must be precisely drilled to form a hollow portion therein, that the insert must be machined into a disposable core and removed by dissolving it with any corrosive acid or that the insert and separate parts of the valve must be welded together. With an engine valve of light metal, the material is expensive but the working is difficult. In addition, the surface of the light-metal valve must be hardened by the use of nitriding or other treatment. Thus, the light-metal valve is not generally practical except a specific engine application.

### SUMMARY OF THE INVENTION

It is therefore an object of the present invention to provide a light-weight engine valve which can be produced without any need for troublesome working operation.

Another object of the present invention is to provide a method of producing such a light-weight engine valve.

To this end, the present invention provides a light-weight engine valve formed by hot-forging and having a light-weight core material filled in the interior of the valve or having a hollow portion formed therein, characterized in that at least the umbrella-like head of said valve is formed from a single blank.

The present invention also provides a method of producing an engine valve, comprising the steps of forming a bore in a blank of heat-resistant steel along its central axis by backward extrusion, filling said bore with a core material having its specific gravity and thermal expansion coefficient smaller than those of said blank and having the melting point where the core material is not melted at the temperature at hot-forging, heating said blank with the core material therein, forming a valve stem portion containing the core material on said blank at the side of the bore opening by hot extrusion, and forming an umbrella-like valve head portion on the remainder of said blank by hot press swaging.

Preferably, the core material is selected from a group consisting of titanium alloy, carbon, graphite, casting sand, ceramic power and the like.

The present invention further provides a method of producing an engine valve, comprising the steps of forming a bore in a blank of heat-resistant steel along its central axis by backward extrusion, filling said bore with a core material having a melting point where the core material is not melted at the temperature at hot forging and being not strongly compacted during the hot forging operation, heating said blank with said core material therein, forming a valve stem portion containing said core material on said blank at the side of the bore opening by hot extrusion, forming an umbrella-like valve head portion on the remainder of said blank by hot press swaging, cutting off the end of said valve stem portioon, completely removing said core material from said blank through the cut end of said valve stem portion to form a hollow portion in said engine valve and sealingly welding a stem end part to the cut end of said valve stem portion.

In the last-mentioned method, the core material is preferably selected from a group consisting of carbon, graphite and the like.


BRIEF DESCRIPTION OF THE ACCOMPANYING DRAWINGS

Figures 1(a) through (e) are schematically cross-sectional views illustrating a sequence of steps for producing a light-weight engine valve in accordance with a method of the present invention.

Figure 2 is a schematic view showing a combination of die and punch which can be used to form a blank into a light-weight engine valve according to the present invention by backward extrusion.

Figure 3 illustrates various sections of the bore formed in the blank used to form a light-weight engine valve according to the present invention.

Figure 4 is a schematically cross-sectional view of a combination of die and punch which can be used to form a valve stem of a light-weight engine valve by forward extrusion.

Figure 5 is a schematically cross-sectional view of a combination of die and punch which can be used to form an umbrella-like valve head of the light-weight valve by hot press swaging.

Figure 6 is a cross-sectional view showing a modified stem end of a light-weight engine valve according to the present invention.

Figure 7 is a view, partially in section, showing another light-weight engine valve formed by another method in accordance with the present invention.

Figure 8 is a view illustrating a step in a further method of the present invention.


DETAILED DESCRIPTION OF THE PREFERRED EMBODIMENTS

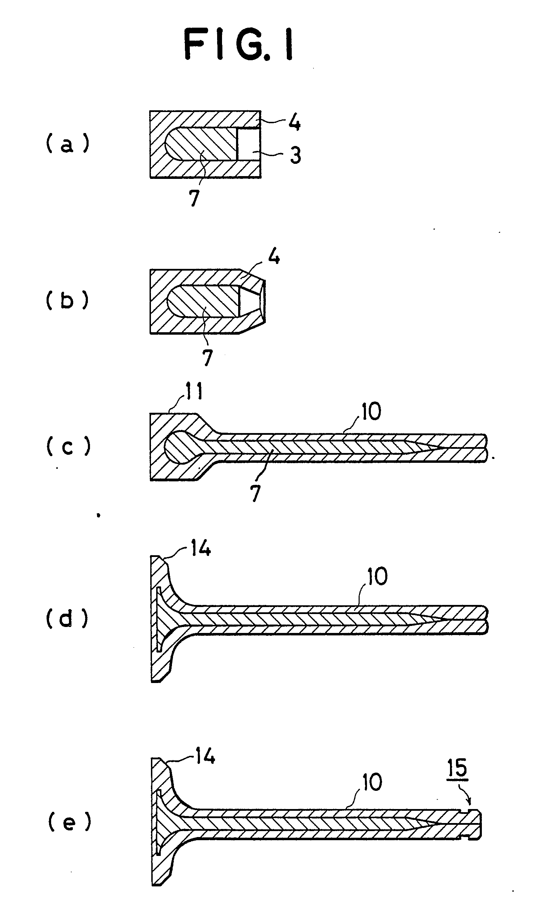

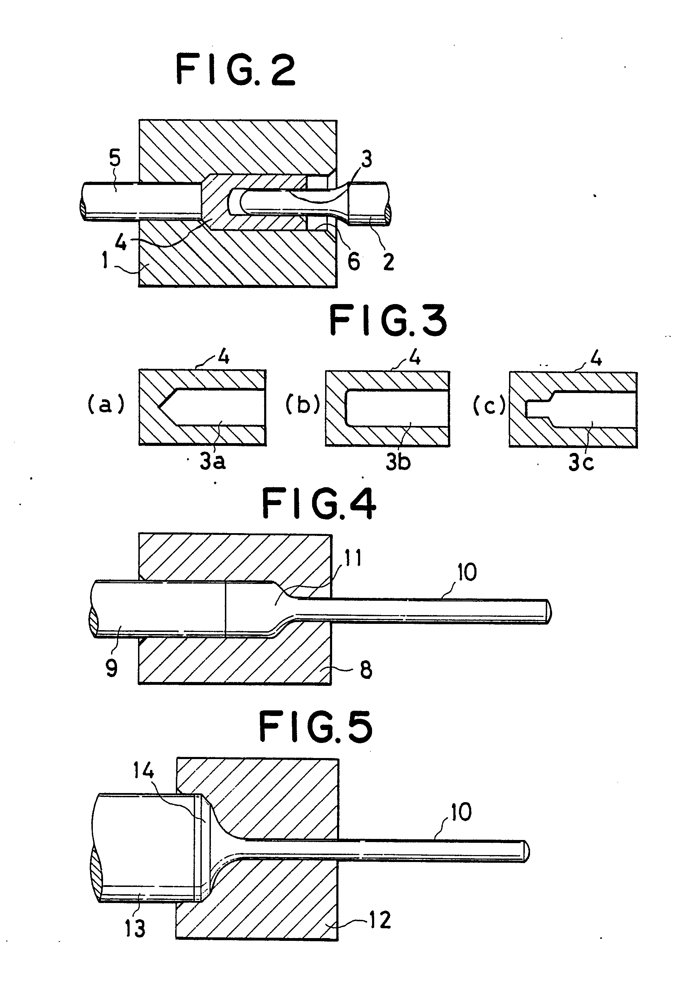

Referring first to Figure 1, there is shown a blank 4 provided by cutting a rod of heat-resistant steel or titanium alloy into a desired length. The blank 4 is placed in a die 1 at its recess 6, as shown in Figure 2. A stock pin 5 is then set at its normal position shown in Figure 2. Subsequently, a punch 2 is used to work the blank by warm or hot backward extrusion. Thus, the blank 4 is formed with a bore 3 closed at one of the ends thereof and extending along the central axis of the blank. When the stock pin 5 is moved to the right, the formed blank 4 is removed out of the die 1.

As shown in Figure 1(a), the bore 3 of the blank 4 is subsequently charged with a core material 7. The core material 7 must be a material which has specific gravity and thermal expansion coefficient smaller than those of the blank 4 and which is easily flow-deformable without fusion at the subsequent hot working. The core material is preferably selected from a group consisting of titanium alloy (not used with a blank of titanium alloy), graphite, carbon, casting sand, ceramic powder and the like.

The bore 3 formed in the blank 4 is not limited to one having a semi-spherical bottom as shown in Figure 1(a) but may be a bore 3a having a conical-shaped bottom shown in Figure 3(a), a cylindrical-shaped bore 3b shown in Figure 3(b) or a bore 3c having a cylindrical-shaped bottom reduced in diameter as shown in Figure 3(c).

As shown in Figure 1(b), the opening of the bore 3 in the blank 4 is subsequently crimped at normal or raised temperatures, depending on the property of the blank material. The crimping is made to prevent the filled core material from being spilled or flowed out through the opening of the bore on hot forging. Therefore, the crimping step is not required if the core material is to be force-fitted into the bore 3 or if a closure for holding the core material is to be mounted in the bore after the core material has been placed in the same bore.

After the core material 7 has been mounted in the bore 3, the blank 4 is heated to a predetermined temperature which is suitable for hot extrusion. The heated blank 4 is then inserted into an extrusion die 8 shown in Figure 4 and compressed by moving a punch 9 from a direction opposite to the opening of the bore 3 toward the blank 4 to forwardly extrude a valve stem 10 on the side of the bore opening at the raised temperature. When the valve stem 10 is extruded a predetermined length, the portion 11 of the blank 4 to be formed into a valve head is left within the die. Since the core material is extruded with the blank confining the same, the core material extends uniformly within the central portion of the valve stem 10, as shown in Figure 1(c).

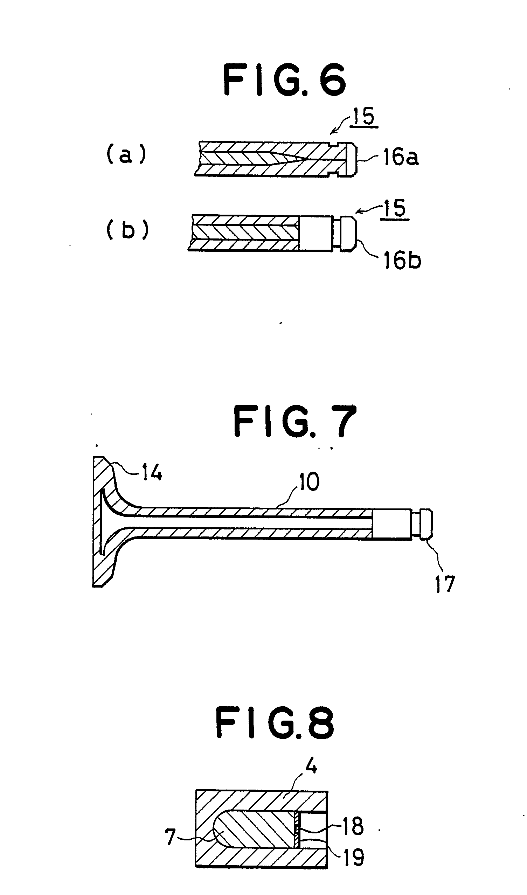

To form an engine valve from the extruded blank, it is inserted into a die 12, as shown in Figure 5. A punch 13 is then used such that the blank portion 11 is subjected to hot-swaging to form an umbrella-like valve head portion 14. Figure 1(d) shows an engine valve removed from the die 12 after the umbrella-like valve head 14 has been hot-swaged.

The valve head 14 has no boundary formed therein due to the presence of the bore 3 since the portion of the blank 4 opposite to the opening of the bore 3 is formed into the valve head 4. Particularly, the surface portion of the valve head 4 to be exposed directly to the combustion chamber of the engine is uniformly shaped from the heat-resistant steel of the blank 4.

As shown in Figure 1(e), the engine valve is subsequently formed with a stem end portion 15. Although the stem end 15 is formed directly on the valve stem as shown in Figure 1(e), the end of the valve stem opposite to the valve head may be cut off and a separate stem end portion 16a or 16b may be welded to the cut end of the valve stem as shown in Figure 6(a) or 6(b).

Figure 7 shows a hollow engine valve produced by the use of a modification of the method according to the present invention. The modified method of the present invention is substantially the same as that of Figure 1 except that it further comprises a sealing step and that a different core material is used. With such a hollow engine valve, the core material is later removed from the interior of the engine valve. Therefore, the core material used therein must have its melting temperature higher than the temperature at hot forging and be not strongly compacted on the hot forging step. The core material is preferably selected from a group consisting of carbon, graphite and the like. A blank is similarly formed into an engine valve through the hot extrusion and press swaging steps. Thereafter, the stem end of the stem portion 10 is cut off to form an opening through which all the core material 7 will be broken and removed outwardly from the valve to form a hollow portion therein. Finally, a stem end part 17 is sealingly welded to the cut end of the stem portion 10.

With the light-weight hollow engine valve, metallic sodium may be contained within the hollow portion of the valve to improve the cooling effect therein, if required.

Figure 8 shows a further modification of the method according to the present invention, which is substantially the same as the previously mentioned method of the present invention except that the core filling step before the hot forging step is different. In Figure 1(b), the opening portion of the blank 4 is crimped to prevent the core material from being spilled out of the interior of the blank 4 through the opening thereof. If a powdered core material is used, it is preferable to use a closure for preventing the powder from being spilled out of the interior of the blank through the opening thereof. In Figure 8, therefore, a closure 19 is mounted within the bore 3 of the blank 4 after the core material 7 has been filled in the bore 3. The closure 19 may have a small opening 18 formed centrally therein. The small opening 18 serves to exhaust air between the particles of the core material into atmosphere on the hot forging step.

From the foregoing, it will be apparent that in accordance with the present invention, no machining step after the hot forging step is required since the valve stem portion is formed in the blank of heat-resistant steel at the open end of the bored blank. In accordance with the present invention, also, a very light engine valve usable over the widened range of operational temperatures can be manufactured more simply and unexpensively since the part of the valve to be exposed directly to the combustion chamber of the engine is formed from the portion of the heat-resistant steel blank which is not influenced by the core material and/or by the presence of the bore formed in the blank. In accordance with the method of the present invention, the core material can be closely packed in the interior of the blank after the hot forging step since the core material is filled into the interior of the blank before the hot forging step. This is particularly advantageous for the powdered core material in that it can be very closely contained in the interior of the blank. With the light-weight valve including the core material (and particularly titanium alloy) contained therein, furthermore, the engine valve becomes superior in rigidness and durability even under severe conditions of the engine. With the light-weight engine valve including the core material of graphite contained therein, moreover, any fine abrasion will not be created between the core material and the blank even on the running of the engine at higher speeds since the graphite is superior in lubricity.

## Claims

1. A light-weight engine valve formed by hot-forging and having a light-weight core material filled in the interior of the valve or having a hollow portion formed therein, characterized in that at least the umbrella-like head of said valve is formed from a single blank.

2. A method of producing an engine valve, comprising the steps of forming a bore in a blank of heat-resistant steel along its central axis by backward extrusion, filling said bore with a core material having its specific gravity and thermal expansion coefficient smaller than those of said blank and having the melting point where the core material is not melted at the temperature at hot-forging, heating said blank with the core material therein, forming a valve stem portion containing the core material on said blank at the side of the bore opening by hot extrusion, and forming an umbrella-like valve head portion on the remainder of said blank by hot press swaging.

3. A method as defined in claim 2 wherein the core material is selected from a group consisting of titanium alloy, carbon, graphite, casting sand, ceramic power and the like.

4. A method of producing an engine valve, comprising the steps of forming a bore in a blank of heat-resistant steel along its central axis by backward extrusion, filling said bore with a core material having a melting point where the core material is not melted the temperature at hot forging and being not strongly compacted during the hot forging operation, heating said blank with said core material therein, forming a valve stem portion containing said core material on said blank at the side of the bore opening by hot extrusion, forming un umbrella-like valve head portion on the remainder of said blank by hot press swaging, cutting off the end of said valve stem portion, completely removing said core material from said blank through the cut end of said valve stem portion to form a hollow portion in said engine valve and sealingly welding a stem end part to the cut end of said valve stem portion.

5. A method as defined in claim 4 wherein the core material is preferably selected from a group consisting of carbon, graphite and the like.

FIG. 1

(a)

(b)

(c)

(d)

(e)

# FIG. 2

# FIG. 3

(a)   (b)   (c)

# FIG. 4

# FIG. 5

# FIG. 6

(a)

15

16a

(b)

15

16b

# FIG. 7

14

10

17

# FIG.8

4

7

18

19

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 040 417 (NEWTON) * Column 3, lines 13-21,31-34; column 4, lines 25-66; figures 1-8 * | 1,2 | F 01 L 3/02 B 23 P 15/00 |
| Y | | 3-5 | |
| X | GB-A- 401 096 (WILCOX-RICH) * Page 2, lines 46-89; figures 3-7 * | 1,2 | |
| Y | PATENT ABSTRACTS OF JAPAN, vol. 11, no. 86 (M-572)[2533], 17th March 1987; & JP-A-61 241 410 (HONDA MOTOR CO LTD) 27-10-1986 * Whole document * | 3 | |
| Y | DE-C- 901 044 (DAIMLER BENZ) * Page 2, lines 17-27; figures 1-8 * | 3 | |
| Y | GB-A- 543 573 (THOMPSON) * Page 2, lines 27-39,116-126; figures 1-4 * | 3,5 | |
| Y | GB-A- 491 615 (TATE) * Page 1, line 74 - page 2, line 35; figures 1-7 * | 4,5 | TECHNICAL FIELDS SEARCHED (Int. Cl.4) F 01 L B 23 P |

The present search report has been drawn up for all claims

| Place of search | Date of completion of the search | Examiner |
|---|---|---|
| THE HAGUE | 27-01-1988 | LEFEBVRE L.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)